# EUROPEAN PATENT SPECIFICATION

(11) **EP 0 658 254 B1**
(45) Date of publication and mention of the grant of the patent: **19.11.1997**
(21) Application number: 93921354.2
(22) Date of filing: 03.09.1993
(51) Int. Cl.: G02F 1/1335, F21V 8/00, F21V 5/02, G02B 5/02

(54) **DISPLAY DEVICE**
ANZEIGEVORRICHTUNG
ECRAN D'AFFICHAGE

(30) Priority: 04.09.1992 JP 236929/92
(43) Date of publication of application: 21.06.1995
(73) Proprietor: MINNESOTA MINING AND MANUFACTURING COMPANY, St. Paul, Minnesota 55133-3427 (US)
(72) Inventor: TOYOOKA, Kazuhiko, Higashine-shi, Tokyo (JP); OKAMOTA, Kazuo, Setagaya-ku, Tokyo (JP)
(74) Representative: Hilleringmann, Jochen, Dipl.-Ing.
(86) International application number: US9308343
(87) International publication number: WO9406051

(56) References cited:
- DATABASE WPI Section Ch, Week 9219, Derwent Publications Ltd., London, GB; Class A32, AN 92-154889 & JP-A-4 091 905
- IBM TECHNICAL DISCLOSURE BULLETIN, vol. 33, no. 9, February 1991, New York US, pp. 261-262, XP000109498; 'High efficiency back light for LCD'
- IBM TECHNICAL DISCLOSURE BULLETIN, vol. 33, no. 1B, June 1990, NewYork US, pp. 143-144, XP000122841; 'Polarized backlight for liquid crystal display'

## Description

### Field of the Invention

The invention relates to a liquid crystal display device for use in computers, word processors, liquid crystal television receivers, and so forth, and more particularly to its backlight structure.

### Background of the Invention

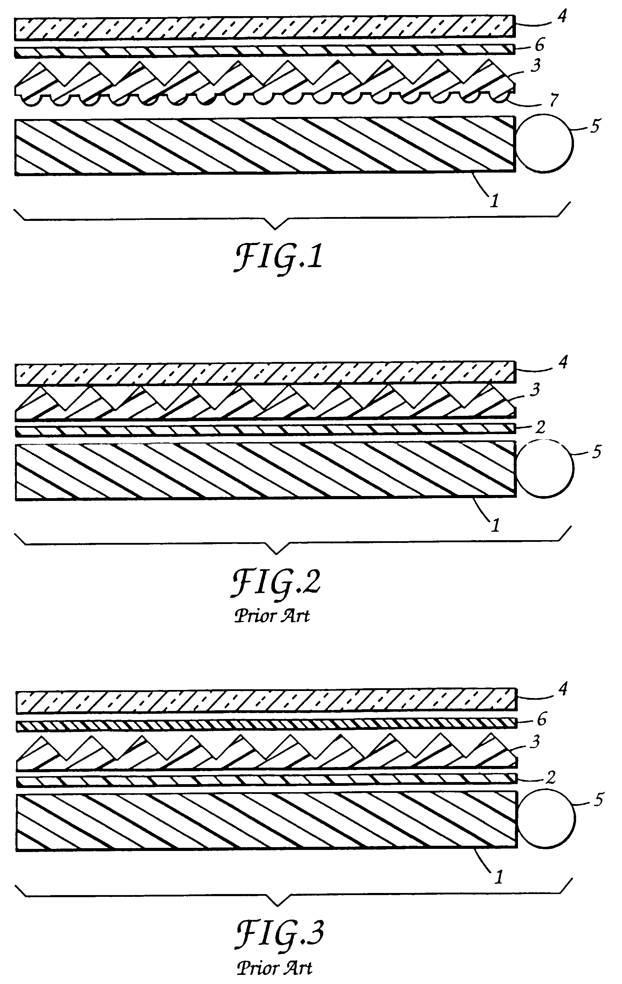

A light conductive panel system described in Japanese Unexamined Patent Publication Nos. 3-190004 and 3-203304 is known as one that may be used with liquid crystal display devices. This system, however, does not use a light transmissive film having a flat surface on one of its surfaces and a parallel prismatic surface on the other and said system uses a diffuse film. Therefore, the system has a problem in that its lighting power is not sufficient when it is used as a backlight for a color liquid crystal. A display device shown in Figure 2 is known as a device that solves this problem. This display device uses a light conductive panel 1, a diffuse film 2. a light transmissive film 3 having a flat surface on one of its surfaces and a parallel prismatic surface on the other, and a liquid crystal panel 4, laminated in this order. Though this device can increase the brightness of a display panel, it has a problem in that grooves of the prism and transparent electrodes of the liquid crystal display panel interfere with one another and the interference fringe of a moiré can be seen.

To solve this problem, it may be possible to use a display device obtained by stacking a light conductive panel 1, a diffuse film 2, a light transmissive film 3 having a substantially flat surface on one of its surfaces and a parallel prismatic surface on the other, a diffuse film 6 and a liquid crystal panel 4 in this order, as shown in Figure 3. Such a device is disclosed by "IBM Technical Disclosure Bulletin", vol. 33, No. 9, February 1991. However, one can easily anticipate the drawbacks in this device, i.e., the number of components increases and brightness drops.

### Summary of the Invention

It is therefore an object of the present invention to provide a liquid crystal display device having a high degree of brightness and that is free from the occurrence of a moire.

The inventors of the present invention have conducted intensive studies in order to solve the problems described above, and have found that the said problems are not present in a display device according to claim 1.

### Brief Description of the Drawings

Figure 1 is a sectional view showing schematically the section of a display device according to the present invention;
Figure 2 is a sectional view showing schematically the section of a conventional display device; and
Figure 3 is a sectional view showing schematically the section of a conventional display device.

### Detailed Description of The Preferred Embodiments

According to the device of the present invention, the diffuse film 6 is sandwiched between the light transmissive film 3 having a substantially flat surface on one of its surfaces and a parallel prismatic surface on its other surface and on the liquid crystal panel 4. Accordingly, the occurrence of the moire interference fringe because of interference between the grooves of the prism and the transparent electrodes of the liquid crystal panel can be prevented. Furthermore, since the diffuse film does not exist between the light transmissive film 3 having a substantially flat surface on one of the surfaces thereof and a parallel prismatic surface on the other surface and on the light conductive panel 1, a loss of brightness does not occur. Since the convex dots are formed on the flat surface of the light transmissive film, the dots take the light into them and increase the brightness. Furthermore, these dots diffuse the light, and the dots formed in the light conductive panel cannot be easily seen.

Accordingly, it is possible to obtain a display device in which the moire interference fringe does not occur, and that has a high degree of brightness.

In the display device according to the present invention, the light conductive panel 1, the light transmissive film 3 having a substantially flat surface on one of its surfaces and a parallel prismatic surface on its other surface, the diffuse film 6 and the liquid crystal panel 4 are stacked in this order as shown in Figure 1, and the transparent convex dots are formed on the flat surface of the light transmissive film 3 having a flat surface on one of its surfaces and a parallel prismatic surface on its other surface. A light source 5 is disposed at one of the end portions of the light conductive panel 1. The word "stack" includes both the case where the layers are adhered and the case where the layers are not adhered.

The light conductive panels and light sources such as a fluorescent lamp, that have been widely employed, can be used as the light conductive panel 1 and the light source 5 used in the present invention. A "3M Optical Lighting Film" (3M OLF) film, a product of Minnesota Mining and Manufacturing Company (3M), for example, can be used as the light transmissive film 3 having a substantially flat surface on one of its surfaces and a parallel prismatic surface on its other surface. A conventional diffuse film that has been conventionally used for liquid crystal display devices can be used as the diffuse film that is sandwiched between the light transmissive film 3 having a flat surface on one of its surfaces and a parallel prismatic surface on its other surface and on the liquid crystal panel 4. Films of polyesters, polyvinyl chloride, etc., can be used, for example. More specifically, those films that are marketed under the trade names "300LM," "D204," etc., by Kimoto Company, can be used. Besides preventing the occurrence of the moire interference fringe described above, these films also prevent the dots 7 formed on the flat surface of the light transmissive film 3 from being easily and clearly observed, and also prevent the dots formed on the light conductive panel 1 from being easily and clearly observed in cooperation with the dots 7.

Since the dots have the function of diffusing light, the haze of the diffuse film 6 of the present invention may be lower than when such dots do not exist. Accordingly, a loss of brightness can be reduced.

Arbitrary liquid crystal panels of the prior art can be used as the light crystal panel 4 of the present invention.

In the present invention, the dots on the flat surface of the light transmissive film 3 having a prismatic shape may be shaped integrally with the light transmissive film 3 or may be shaped separately. Integral shaping can be carried out by a cast mold, by press molding or by cutting. Separate shaping can be carried out by printing, adhesion by an adhesive, and so forth. Printing can be carried out, for example, by attaching a polymer composition dissolved in a solvent in dot form, and then removing the solvent.

Preferably, the polymer material is that which is prepared by dissolving a resin component such as an acrylic resin, polycarbonate resin, a polyvinyl chloride resin, a silicon resin, an epoxy resin, a urethane resin, a vinyl acetate resin, an SBR resin, a natural rubber or their mixture in a solvent such as an ester, e.g., ethyl acetate and methyl acetate; a ketone such as methyl ethyl ketone, a methyl isobutyl ketone, or their mixture, in a concentration of 10 to 50 percent. An example of such products is "GV-107" ink of NAZDAR Company (resin component: acrylic type + polyvinyl chloride; solvent: ester type + ketone type). The dots can also be formed by screen printing a UV curable resin or an EB curable resin and then curing the resin by irradiating light from a UV lamp or an electron beam.

The diameter of the dots is preferably up to 0.25 mm and the pitch of the dots (the distance between the dots) is preferably up to 1.2 mm, though these values vary with the material of the dots, the shaping method and the shape. When the pitch is greater than 1.2 mm and the dot diameter is greater than 0.25 mm, the light intake effect drops and the dots tend to be seen more clearly on the display. The planner shape of the dots is preferably round the cubic shape is preferably a smooth convex. The thickness is preferably from about 1 µm to about 500 µm.

The formation of the dots by printing can be easily carried out by dot printing, such as silk printing and gravure printing.

When the material of the dots is not transparent, a loss of brightness occurs. Therefore, the material of the dots must be transparent.

Here, a definite example of the display device according to the present invention will be illustrated, and the effects of the present invention will be clarified in comparison with those of the prior art.

Dot printing was effected on the flat surface side of an "OLF" produced by 3M Co., using a GV107 ink of NAZDAR Co., (resin content: acrylic type + polyvinyl chloride type, solvent: ester type + ketone type) and also using a silk screen stencil of tetron having 300 mesh and a 4 µ-thick emulsion layer, to a pitch of 0.46 mm and a diameter of 0.2 mm. This OLF was disposed as shown in Figure 1, and brightness at the center portion of the panel was measured from a perpendicular direction to the panel surface (brightness in the axis direction) inside a dark room. The diffuse films used were "300LM" and "204," both of Komoto Co., and the measurement was carried out by not using the liquid crystal panel. The measurement was carried out using a Minolta brightness meter LS-110S. The measurement values represent the ratio of brightness of the cases where the OLF was not inserted. The occurrence of the moiré was also tested by sight. The result was represented by the number of persons observing the occurrence of the moire among the ten panelists. For comparison, the measurement was also carried out for each of the following structures.
* This invention: dot printing OLF + diffuse film (6) (300 LM) (Figure 1)
* Prior Art: diffuse film (2) (D204) + OLF (Figure 2)
* Prior Art: diffuse film (2) (D204) + OLF + diffuse film (6) (300 LM) (Figure 3)

| | This invention | Prior Art | Prior Art |
|---|---|---|---|
| brightness (times) | 1.59 | 1.58 | 1.49 |
| moire test | 0 | 10 | 0 |

As seen from the above, the present apparatus does not show moire in comparison with the prior art-1 apparatus and provide a higher brightness in composition with the prior art-2 apparatus.

## Claims

1. A display device comprising a light conductive panel (1), a light transmissive film (3) having a substantially flat surface (3b) on one of the surfaces thereof and a parallel prismatic surface (3a) on the other, a diffuse film (6), and a liquid crystal panel (4), stacked one upon another in this order, wherein said flat surface faces said light conductive panel, characterized in that said flat surface of said light transmissive film has transparent convex dots formed on said flat surface.

2. A display device according to Claim 1, wherein said transparent convex dots are made of a polymer material.

3. A display device according to Claim 1, wherein the diameter of said dots is not greater than 0.25 mm, and the distance between said dots is not greater than 1.20 mm.

## Patentansprüche

1. Anzeigevorrichtung mit einer lichtleitfähigen Platte (1), einer lichtdurchlässigen Folie (3) mit einer im wesentlichen ebenen Oberfläche (3b) auf einer ihrer Seiten und einer parallel-prismatischen Oberfläche (3a) auf der anderen Seite, einer Diffusor-Folie (6) und einer Flüssigkristallplatte (4), die in der genannten Reihenfolge aufeinandergelegt sind, wobei die ebene Oberfläche der lichtleitfähigen Platte zugewandt ist, dadurch gekennzeichnet, daß die ebene Oberfläche der lichtdurchlässigen Folie mit auf der ebenen Oberfläche ausgebildeten transparenten konvexen Punkten versehen ist.

2. Anzeigevorrichtung nach Anspruch 1, bei der die transparenten konvexen Punkte aus einem Polymermaterial bestehen.

3. Anzeigevorrichtung nach Anspruch 1, bei der der Durchmesser der Punkte nicht größer als 0,25 mm und der Abstand zwischen den Punkten nicht größer als 1,20 mm ist.

## Revendications

1. Un dispositif d'affichage comprenant un panneau (1) conduisant la lumière, un film (3) transmettant la lumière qui comporte une surface sensiblement plate (3b) sur une première de ses surfaces et une surface prismatique parallèle (3a) sur l'autre, un film diffus (6), et un panneau (4) à cristaux liquides, empilés l'un sur l'autre dans cet ordre, ladite surface plate faisant face audit panneau conduisant la lumière, caractérisé en ce que ladite surface plate dudit film transmettant la lumière comporte des points convexes transparents formés sur ladite surface plate.

2. Un dispositif d'affichage selon la revendication 1, dans lequel lesdits points convexes transparents sont en une matière polymère.

3. Un dispositif d'affichage selon la revendication 1, dans lequel le diamètre desdits points n'est pas supérieur à 0,25 mm, et la distance entre lesdits points n'est pas supérieure à 1,20 mm.
